# EUROPÄISCHE PATENTANMELDUNG

(11) **EP 4 509 445 A1**
(43) Veröffentlichungstag der Anmeldung: **19.02.2025**
(21) Anmeldenummer: 24194568.2
(22) Anmeldetag: 14.08.2024
(51) Int. Cl.: B65G 67/08, B65G 67/24, B65G 61/00

(54) **VERFAHREN ZUM BELADEN VON EINZELPACKSTÜCKEN IN EIN LADEVOLUMEN MIT ZWISCHENSPEICHER**

(30) Priorität: 16.08.2023 DE 102023121874
(71) Anmelder: TRAPO GmbH, 48712 Gescher-Hochmoor (DE)
(72) Erfinder: MÖLLMANN, Erik, Rhede (DE); KURTENBACH, Stefan, Schermbeck (DE)
(74) Vertreter: Lenzing Gerber Stute

(57) **Zusammenfassung**

Die Erfindung betrifft ein Verfahren zum Beladen von Einzelpackstücken (7) in ein Ladevolumen (6) mit folgenden Schritten:
a) Auslagern von Einzelpackstücken (7), die in das Ladevolumen (6) beladen werden sollen und
b) Zuführen der Einzelpackstücke (7) in einen Zwischenspeicher (2), wobei die Reihenfolge der zugeführten Einzelpackstücke (7) undefiniert ist und der Zwischenspeicher (2) eine vordefinierte Anzahl an Speicherplätzen (11,12) aufweist,
c) Gezieltes Abführen eines Einzelpackstückes (7) von einem der Speicherplätze (11,12) aus dem Zwischenspeicher (2) und Weiterfördern des abgeführten Einzelpackstückes (7) in das Ladevolumen (6),
d) Ablegen des Einzelpackstückes (7) innerhalb des Ladevolumens (6) mittels eines Roboters (5), wobei die Reihenfolge der Ablage der Reihenfolge beim Abführen aus dem Zwischenspeicher (2) entspricht und die Ablage mit Optimierung des Füllgrades des Ladevolumens (6) erfolgt.

## Beschreibung

Die Erfindung betrifft ein Verfahren zum Beladen von Einzelpackstücken in ein Ladevolumen, ein Beladesystem mit einem Zwischenspeicher sowie die Verwendung eines Beladesystems mit einem Zwischenspeicher zur Beladung eines Ladevolumens und ein Computerprogrammprodukt.

In Logistikzentren werden große Mengen an Päckchen, Paketen oder Versandtaschen in Ladevolumen, die beispielsweise in LKW-Anhängern, Bahncontainern, mittels Ladebrücken oder in Flughafen-Dollies ausgebildet werden, eingeladen und nach dem Transportvorgang in einem Verteilzentrum entladen oder an ein angeschlossenes Logistiksystem, z. B. eines Paketdienstleisters übergeben.

Um Kosten und Ressourcen im Warenverkehr zu sparen, ist es wichtig, vorhandene Kapazitäten optimal zu nutzen. Dazu gehört auch das Ladevolumen so gut es geht auszuschöpfen.

Bisher erfolgt der Beladevorgang meistens an sogenannten Teleskopfördervorrichtungen (auch Teleskopbänder oder Teleskopförderer genannt), an denen die Ladevolumen an großen Eingangstoren von Logistikzentren bereitgestellt werden und von Hand von Förderbändern entnommen und in die Ladevolumen gestapelt werden. Bei einer optimalen Beladung werden die Stückgüter idealerweise derart sortiert, dass das Ladevolumen eines Lkw zu 90% und besser ausgefüllt ist. Um einen derart hohen Füllgrad zu erreichen, muss vom Belader eine Optimierung durchgeführt werden. Dabei werden Pakete zur Seite gestellt und bei der Beladung sortiert. Der Füllgrad (auch Laderaumauslastung bei Lkws genannt) ergibt sich zum einen daraus, wie unterschiedlich die zur Beladung vorgesehenen Stückgüter in Ihrer Größe ausgebildet sind und damit einhergehend ob diese jeweils eine Grundfläche aufweisen, die ein Vielfaches der Grundflächen der übrigen Stückgüter entsprechen, ob es bestimmte Vorgaben für den Transport gibt, beispielsweise wie die Orientierung des Stückgutes im Ladevolumen und wie gut eine Vorsortierung bzw. Sortierung erfolgt. Bisher war dies dem Belader, der das Ladevolumen händisch belädt, zum größten Teil überlassen, für eine hohe Auslastung des Ladevolumens zu sorgen.

In den neusten Generationen von Beladesystemen übernehmen Roboter das Ablegen der Stückgüter in dem Ladevolumen. Diese Roboter oder Robotersysteme können die Pakete nicht zurückstellen, wenn diese nicht die für den Stapel optimalen Bedingungen haben. Der zu erreichende Füllgrad des Ladevolumens ist dadurch wesentlich geringer.

Es ist eine Aufgabe der Erfindung ein Verfahren zum Beladen von Einzelpackstücke in ein Ladevolumen anzugeben, dass eine besonders gute Auslastung des Ladevolumens ermöglicht.

Die Erfindung wird gelöst von einem Verfahren mit den Merkmalen des Anspruchs 1, einem Beladesystem mit den Merkmalen des Anspruchs 9, einer Verwendung des Beladesystems zur füllgradoptimierten Beladung eines Ladevolumens eines an einer Laderampe oder Ladebrücke eines Logistikzentrums stehenden Lkws, sowie einem Computerprogrammprodukt mit den Merkmalen des Anspruchs 13.

Demnach ist ein Verfahren zum Beladen von Einzelpackstücken in ein Ladevolumen mit folgenden Schritten vorgesehen:
a) Auslagern von Einzelpackstücken (bevorzugt aus einem Lagerhaus), die in das Ladevolumen beladen werden sollen und
b) Zuführen der Einzelpackstücke in einen Zwischenspeicher, wobei die Reihenfolge der zugeführten Einzelpackstücke undefiniert ist und der Zwischenspeicher eine vordefinierte Anzahl an Speicherplätzen aufweist,
c) Gezieltes Abführen eines Einzelpackstückes von einem der Speicherplätze aus dem Zwischenspeicher und Weiterfördern des abgeführten Einzelpackstückes in das Ladevolumen,
d) Ablegen des Einzelpackstückes innerhalb des Ladevolumens mittels eines Roboters, wobei die Reihenfolge der Ablage der Reihenfolge beim Abführen aus dem Zwischenspeicher entspricht und die Ablage mit Optimierung des Füllgrades des Ladevolumens erfolgt.

Durch das Verfahren ist es möglich, einen besseren Füllgrad des Ladevolumens bei automatisierter Beladung mit einem Roboter zu erreichen. Da die in undefinierter Reihenfolge ausgelagerten Einzelpackstücke gezielt von den Speicherplätzen des Zwischenspeichers entnommen werden können und dadurch zu einem gewissen Grad eine Sortierung erfolgt. Das Ablegen in Schritt d) erfolgt bevorzugt an der finalen Position. Es ist nicht vorgesehen, dass das Einzelpackstück nach der Ablage noch einmal bewegt wird.

Die Schritte erfolgen bevorzugt in der angegebenen Reihenfolge. Einzelpackstücke sind bevorzugt Pakete (in Kartons eingepackte Ware) und/oder flexible Versandtaschen. Das Ladevolumen ist das zu beladene Volumen. Es ist bevorzugt quaderförmig und auf wenigstens vier Seiten durch eine Wand (starr, aber auch flexibel beispielsweise in Form einer Lkw-Plane) nach oben, unten und zur Seite hin begrenzt. Die Begrenzungen sind bevorzugt Außenwände. In anderen Worten findet keine weitere Unterteilung eines Gesamttransportvolumens in der Breite oder Höhe statt. Die Begrenzung nach vorne und hinten kann durch eine Außenwand, wie eine Vorderwand und eine Rückwand beispielsweise eines Containers oder eines Lkws definiert sein. Es ist aber auch denkbar, dass das Gesamtladevolumen in Teilladevolumen unterteilt wird, beispielsweise weil die Ladevolumen unterschiedlichen Transportzielen zugeordnet sind. Teilladevolumen sind ebenfalls bevorzugt quaderförmig, insbesondere ist lediglich die Tiefe des Volumens definierbar und die Seitenwände, sowie die Decke und der Boden sind Außenwände. In anderen Worten, sie erstrecken sich über die gesamte Breite und Höhe des Gesamtladevolumens.

Der Roboter kann ein Roboterarm sein, der auf einem autonom fahrenden Fahrzeug sitzt.

In Schritt c) wird bevorzugt das Einzelpackstück gezielt zur Optimierung des Füllgrades ausgewählt.

Das Auslagern der Einzelpackstücke erfolgt bevorzugt aus einem Lagerhaus eines Logistikzentrums. Vorzugsweise muss jedes ausgelagerte Einzelpackstück durch den Zwischenspeicher gefördert werden.

Die Anzahl der Speicherplätze ist vorzugsweise derart gewählt, dass durch das Ablegen der Einzelpackstücke ein Füllgrad von wenigstens 85%, insbesondere von wenigstens 90% des Ladevolumens erreicht werden kann. Insbesondere beträgt die Anzahl der Speicherplätze zwischen 4 und 30, insbesondere zwischen 4 und 10.

Es kann sein, dass bei der Zuführung in den Zwischenspeicher, im Zwischenspeicher und/oder bei der Abführung aus dem Zwischenspeicher Informationen zu dem Einzelpackstück gewonnen werden. Insbesondere dann, wenn Informationen zu dem Einzelpackstück noch nicht vorliegen. Informationen können die Größe, das Gewicht, die Orientierung und/oder die Position des Einzelpackstücks sein.

Es ist vorteilhaft, wenn bei der Zuführung in den Zwischenspeicher, im Zwischenspeicher und/oder bei der Abführung aus dem Zwischenspeicher das Einzelpackstück gezielt für das Weiterfördern orientiert (z. B. in der Ebene gedreht) wird. Das Einzelpackstück ist dann bereits für das Aufnehmen durch den Roboter ausgerichtet.

In einer vorteilhaften Ausführungsform weist der Zwischenspeicher mehrere Ebenen mit einer vorgegebenen Anzahl an Speicherplätzen auf und in den Schritten b) und c) wird das Einzelpackstück in die entsprechende Ebene zugeführt oder von der entsprechenden Ebene abgeführt. Durch das Verteilen der Speicherplätze auf mehrere Ebenen kann die Grundfläche des Zwischenspeichers reduziert werden. Bevorzugt erfolgt die Zuführung oder Abführung mit einer höhenvariablen Förderstrecke, die an einer Seite auf die Höhen der Ebenen verfahrbar ist und auf der anderen Seite an das jeweilige Fördersystem anschließt.

Es ist vorteilhaft, wenn in Schritt c) das Weiterfördern mittels eines Teleskopförderers erfolgt, dessen Länge der Förderstrecke an die Position des Roboters in Schritt d) angepasst ist. Der Teleskopförderer kann als ausfahrbarer Bandförderer ausgebildet sein. Der Roboter befindet sich beim Beladen in dem Ladevolumen. Je nach Beladezustand kann sowohl die Position des Roboters als auch die Länge der Förderstrecke des Teleskopförderers angepasst werden.

Es kann vorgesehen sein, dass das Ladevolumen nach dem es beladen wurde, an einen Zielort transportiert wird und dort vollständig entladen wird. Die Beladung erfolgt mit einer Optimierung des Füllgrades des Ladevolumens. Sollten weitere Randbedingungen existieren, wie das besonders schwere Pakete im unteren Teil platziert werden müssen, können diese mit in die Optimierung einfließen.

Weiterhin ist ein Beladesystem vorgesehen mit
- einer ersten Förderstrecke, die dazu ausgebildet, aus einem Lagerhaus ausgelagerte Einzelpackstücke zu fördern,
- einem Zwischenspeicher, der die mittels der ersten Förderstrecke geförderten Einzelpackstücke aufnimmt und einzelnen Speicherplätzen zuordnet,
- einem Teleskopförderer, der sich an den Zwischenspeicher anschließt und von dem Zwischenspeicher abgeführte Einzelpackstücke aufnimmt, und mit
- einem Beladeroboter, der am Ende der Förderstrecke des Teleskopförderers angeordnet ist und dazu ausgebildet ist, einen Laderaum vollautomatisiert unter Optimierung des Füllgrades des Laderaums mit den Einzelpackstücken zu beladen.

Das Beladesystem, insbesondere der Zwischenspeicher können wie vorstehend beschrieben, ausgebildet sein.

Der Zwischenspeicher ist bevorzugt in einem Verladebereich eines Logistikzentrums oder angrenzend an einen Verladebereich eines Logistikzentrums angeordnet. Diese Anordnung ist besonders effizient, da der Bauraum nicht im Lagerhaus zur Verfügung gestellt werden muss. Es besteht bevorzugt eine feste Zuordnung eines Zwischenspeichers zu einem (einzigen) im Verladebereich bereitgestellten Laderaum. Der Zwischenspeicher kann nur Einzelpackstücke aufnehmen, die für seinen Verladebereich aus dem Lagerhaus ausgelagert wurden. Eine Verteilung auf mehrere Laderampen bzw. Ladebrücken erfolgt nicht.

Außerdem ist eine Verwendung eines zuvor beschriebenen Beladesystems zur füllgradoptimierten Beladung eines Ladevolumens eines an einer Laderampe oder Ladebrücke eines Logistikzentrums stehenden Lkws vorgesehen. Wobei das Ladevolumen nach der Beladung bevorzugt ein Verteilzentrum als Transportziel oder ein angeschlossenes Logistiksystem, z. B. eines Paketdienstleisters, wo es entladen wird.

Zudem ist ein Computerprogrammprodukt vorgesehen, mit Anweisungen, die das zuvor beschriebene Beladesystem veranlassen, die Schritte des zuvor beschriebenen Verfahrens auszuführen.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Figur 1:: eine räumliche Ansicht eines Beladesystems zur Beladung eines Ladevolumens eines Lkws,
- Figur 2:: eine seitliche Ansicht des Beladesystems der Figur 1, sowie
- Figur 3:: eine Draufsicht auf das Beladesystem der Figur 1.

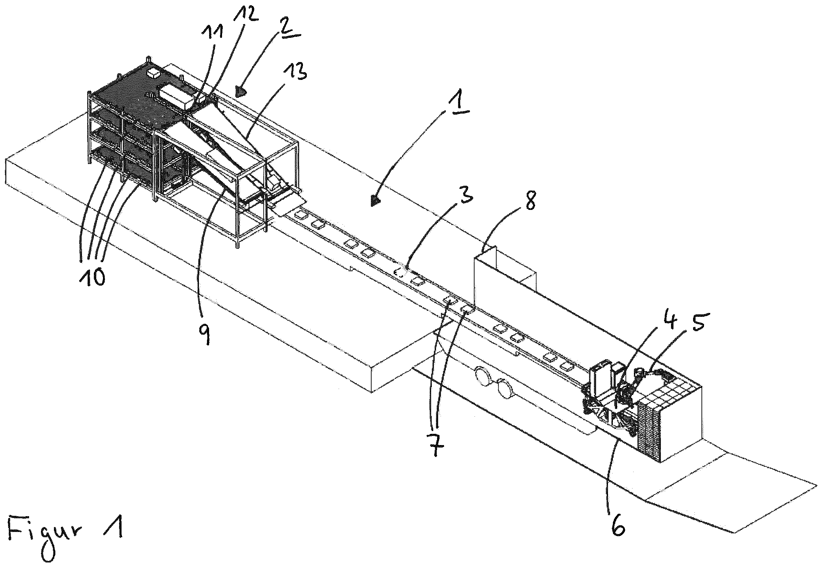

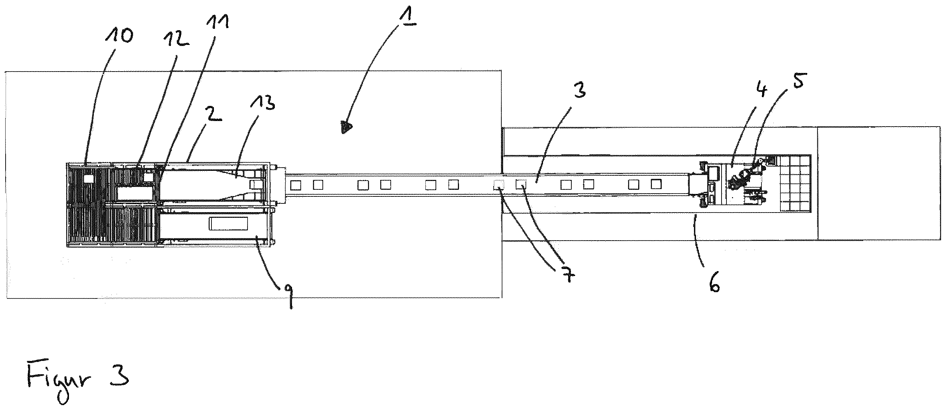

In den Figuren 1 bis 3 ist ein Beladesystem 1 mit einem Zwischenspeicher 2, einem Teleskopförderer 3 und einem selbstfahrenden Fahrzeug 4, auf dem ein Roboterarm 5 befestigt ist, dargestellt.

Der Zwischenspeicher 2 steht in einem Verladebereich bzw. angrenzend an einen Verladebereich eines Logistikzentrums und liegt somit außerhalb eines Ladevolumens 6. Einzelpackstücke 7 in Form von Paketen werden für eine vordefinierte Laderampe 8 aus einem Lagerhaus ausgelagert und zu dem Zwischenspeicher 2 gefördert (nicht dargestellt). Dabei erfolgt die Aussortierung aus dem Lagerhaus zufällig. Die einzige Sortierung die stattfindet, ist die Zuordnung zum Zwischenspeicher 2 bzw. zur Laderampe 8. Die Reihenfolge der geförderten Einzelpackstücke 7 ist unbestimmt. Die Pakete weisen einen festen Karton in quaderförmiger Form auf, in dem Waren, insbesondere Kleidung verpackt sind. Informationen, wie Gewicht, Inhalt, beispielsweise über QR-/ BAR-Code, und/oder Größe der Einzelpackstücke 7 können bei der Zuführung zum Zwischenspeicher 2 bereits erfasst sein. Auch die Position und die Orientierung des Einzelpackstückes können bekannt sein. Es ist aber auch denkbar, dass diese Informationen oder ein Teil davon erst bei der Zuführung in den Zwischenspeicher 2, im Zwischenspeicher 2 selbst und/oder beim Abführen aus dem Zwischenspeicher 2 erfasst werden.

Die Zuführung in den Zwischenspeicher 2 erfolgt an einer Querseite, die sich senkrecht zur Förderrichtung des Teleskopförderers 3 erstreckt. Die Zuführung umfasst eine höhenvariabel Förderstrecke 9 in Form einer Rampe. Die Förderstrecke 9 der Zuführung ist geradlinig und erstreckt sich parallel zur Längsrichtung des Teleskopförderers 2. Bei der Zuführung kann vorgesehen sein, dass die Orientierung des Einzelpackstückes 7 definiert und/oder geändert wird.

Der Zwischenspeicher 2 weist vier Ebenen 10 mit jeweils zwei Speicherplätzen 11,12 auf. In jeweils einem Speicherplatz kann ein Einzelpackstück 7 zwischengespeichert bzw. zwischengelagert werden. In anderen Worten kann ein Einzelpackstück 7 in dem Speicherplatz für einen definierten Zeitraum gehalten werden, bis das System das Abführen des Einzelpackstückes fordert. Von der Zuführung gelangen die Pakete auf die ausgewählte Ebene 10 und werden dort mittels Fördertechnik vom Übergabepunkt ausgehend innerhalb der Ebene 10 zum Speicherplatz 11,12 transportiert. Wenn eine Orientierung der Einzelpackstücke 7 innerhalb der Ebene 10 erfolgt, werden die Pakete bevorzugt so positioniert, dass ein direktes Abführen möglich ist.

An die beiden Speicherplätze 11,12 einer Ebene 10 schließt sich eine Abführung an, die ebenfalls eine höhenvariabel Förderstrecke 13 in Form einer Rampe umfasst. Es sind zwei Übergabepunkt, die an die Speicherplätze 11,12 unmittelbar anschließen zur Abführung vorgesehen. Beide Übergabepunkte sind einer einzigen Förderstrecke 13 zugeordnet. Ein auf die Abführung übergebenes Paket wird unmittelbar auf dem Teleskopförderer 2 abgelegt, bzw. fällt auf das Fördermittel des Teleskopförderers. Die Abführung liegt daher zumindest an einem Ende oberhalb des Fördermittels des Teleskopförderers 2. Die Förderstrecke der Abführung ist geradlinig und erstreckt sich parallel zur Längsrichtung des Teleskopförderers 2. Die Förderstrecke 13 der Abführung liegt neben der Förderstrecke 9 der Zuführung und parallel dazu. Dadurch wird der Zwischenspeicher besonders kompakt. Die beiden Förderstrecken 9,13 lassen sich jeweils an einem Ende in der Höhe verfahren. Das Ende kann somit auf die Höhe der jeweiligen Ebene 10 gefahren werden, so dass eine Zuführung oder Abführung aus der entsprechenden Ebene 10 möglich ist. Bei der Fördertechnik der Förderstrecke 9,13 kann es sich um Rollen-, Riemen-, Gurt-, und/oder Kettenförderer handeln. Es ist denkbar, dass bei der Bewegung der Pakete in der Ebene 10, die Orientierung der Pakete angepasst bzw. vorgenommen wird.

Die Anzahl der benötigten Speicherplätze 11,12 ergibt sich aus dem jeweiligen Anwendungsfall. In der dargestellten Ausführungsform weisen alle zu beladenen Pakete ein Abmaß auf, das sich aus vier Kombinationsmöglichkeiten aus drei unterschiedlichen Paketlängen und zwei unterschiedlichen Paketbreiten ergibt, wobei die Paketlänge und die Paketbreite sich auf die spätere Lage im Stapel im Laderaum beziehen. Die Pakete können daher sehr platzsparend gestapelt werden. Pakete mit der kleinsten Grundfläche der Kombinationsmöglichkeiten machen in der dargestellten Ausführungsform etwa 33% der Gesamtanzahl der Einzelpackstücke 7 aus. Mit acht Speicherplätzen 11,12 befindet sich mit hoher Wahrscheinlichkeit ein Paket an einem der Speicherplätze 11,12, das die für eine bestmögliche Auslastung des Ladevolumens 6 benötigten Eigenschaften, wie beispielsweise die gleiche Grundfläche aufweist. Durch identische Grundflächen können im Laderaum Stapel mit einem hohen Dichtegrad gebildet werden, da kein Luftspalt aufgrund von variierenden Paketgrößen entsteht. Die Anzahl der Speicherplätze 11,12 kann in einer Größenordnung zwischen 4 und 30 liegen, insbesondere zwischen 4 und 10. Dieser Bereich ist besonders wirtschaftlich, da die Kosten und der benötigte Raum für den Zwischenspeicher 2 in einem guten Verhältnis zu der daraus resultierenden Verbesserung des Füllgrades stehen. Trotz automatisierter bzw. autonomer Beladung kann so ein Füllgrad des Ladevolumens von 85-95%, insbesondere zwischen 88% und 93% erreicht werden. Die Kombinationsmöglichkeiten aus Paketlänge und Paketbreite liegen bevorzugt zwischen 3 und 10, insbesondere zwischen 3 und 5.

Die Software zur Optimierung der Beladung wählt ein an den Speicherplätzen 11,12 zur Verfügung stehendes Paket aus und dieses wird über die Abführung an den Teleskopförderer 2 übergeben.

Der freie Speicherplatz 11,12 wird danach wiederbesetzt. Bevorzugt wird der Speicherplatz 11,12 von einem Paket besetzt, dass möglichst ähnlich zu dem abgeführten Paket ist, insbesondere eine ähnliche, bevorzugt identische Grundfläche aus Paketlänge und Paketbreite aufweist.

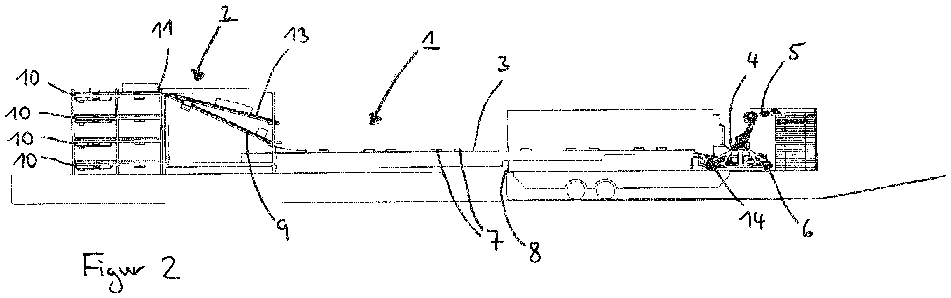

Der Teleskopförderer 2 weist eine Förderstrecke mit einer variablen Länge auf. In den Figuren ist der Teleskopförderer 2 lediglich schematisch dargestellt. Es handelt sich um einen Bandförderer. Der Teleskopförderer weist einen in einer entsprechenden Halteeinrichtung höhenverstellbar gelagerten Grundkörper auf, in dem mindestens zwei ausfahrbare (und maximal fünf) Teleskopsegmente verschiebbar gelagert sind. Der Grundkörper und die Teleskopsegmente sind mit Umlenkrollen versehen, um die ein Transportband herumgeführt ist. Der Teleskopförderer 2 ragt in das Ladevolumen 6 hinein und die Förderstrecke endet innerhalb des Ladevolumens 6. Die Förderstrecke ist an die Position des selbstfahrenden Fahrzeuges 4 angepasst bzw. auf diese abgestimmt. Von der Förderstrecke des Teleskopförderers 2 gelangt das Einzelpackstück 7 unmittelbar auf eine aus Figur 2 ersichtliche Fördereinheit 14 des selbstfahrenden Fahrzeuges und wird dort von dem Roboterarm 5 bzw. dem an dem Roboterarm befestigten Werkzeug gegriffen. Der Roboterarm 5 legt das Paket in dem Ladevolumen 6 an der finalen Position ab. Der Roboter 5 greift die Einzelpackstücke 7 in der Reihenfolge, in der sie auf den Teleskopförderer 2 gelegt wurden. Die Ablage der Pakete erfolgt mit dem Ziel, den Füllgrad des Ladevolumens zu optimieren. Das System überprüft die Ablage der Pakete in dem Ladevolumen 6 mittels Bilderkennung.

Es kann vorgesehen sein, dass die Optimierung für einen Teilbereich des insgesamt zur Verfügung stehenden Ladevolumens 6 vorgenommen wird. Dies erfolgt beispielsweise, wenn zwei oder mehrere Transportziele vorhanden sind. In diesem Fall kommen die aus dem Lagerhaus ausgelagerten Einzelpackstücke 7 sortiert nach dem Transportziel an dem Zwischenspeicher 2 an. Es wird eine Füllgradoptimierung einer ersten Beladung eines ersten Teils des Ladevolumens für ein erstes Transportziel vorgenommen. Danach kann der beladene Teilbereich mit einer Transportsicherung, z. B. einer Querstrebe versehen werden, die den beladenen Teilbereich sichert und von dem übrigen Ladevolumen abgrenzt. Der übrige Teilbereich kann dann einem anderen Transportziel zugeordnet werden. Die Beladung erfolgt dann mit derselben Optimierung, aber vollkommen eigenständig und unabhängig von der ersten Beladung.

## Patentansprüche

1. Verfahren zum Beladen von Einzelpackstücken (7) in ein Ladevolumen (6) mit folgenden Schritten:
a) Auslagern von Einzelpackstücken (7), die in das Ladevolumen (6) beladen werden sollen und
b) Zuführen der Einzelpackstücke (7) in einen Zwischenspeicher (2), wobei die Reihenfolge der zugeführten Einzelpackstücke (7) undefiniert ist und der Zwischenspeicher (2) eine vordefinierte Anzahl an Speicherplätzen (11,12) aufweist,
c) Gezieltes Abführen eines Einzelpackstückes (7) von einem der Speicherplätze (11,12) aus dem Zwischenspeicher (2) und Weiterfördern des abgeführten Einzelpackstückes (7) zum Ladevolumen (6),
d) Ablegen des Einzelpackstückes (7) innerhalb des Ladevolumens (6) mittels eines Roboters (5), wobei die Reihenfolge der Ablage der Reihenfolge beim Abführen aus dem Zwischenspeicher (2) entspricht und die Ablage mit Optimierung des Füllgrades des Ladevolumens (6) erfolgt.

2. Verfahren nach Anspruch 1, **dadurch gekennzeichnet, dass** die Anzahl der Speicherplätze (11,12) derart gewählt ist, dass durch das Ablegen der Einzelpackstücke (7) ein Füllgrad von wenigstens 85% des Ladevolumens (6) erreicht wird

3. Verfahren nach Anspruch 1 oder 2, **dadurch gekennzeichnet, dass** die Anzahl der Speicherplätze (11,12) zwischen 4 und 30 beträgt.

4. Verfahren nach einem der vorhergehenden Ansprüche, **dadurch gekennzeichnet, dass** bei der Zuführung in den Zwischenspeicher (2), im Zwischenspeicher (2) und/oder bei der Abführung aus dem Zwischenspeicher (2) Informationen zu dem Einzelpackstück (7) gewonnen werden.

5. Verfahren nach einem der vorhergehenden Ansprüche, **dadurch gekennzeichnet, dass** bei der Zuführung in den Zwischenspeicher (2), im Zwischenspeicher (2) und/oder bei der Abführung aus dem Zwischenspeicher (2) das Einzelpackstück (7) gezielt für das Weiterfördern orientiert wird.

6. Verfahren nach einem der vorhergehenden Ansprüche, **dadurch gekennzeichnet, dass** der Zwischenspeicher (2) mehrere Ebenen (10) mit einer vorgegeben Anzahl an Speicherplätzen (11,12) aufweist und in den Schritten b) und c) das Einzelpackstück (7) in die entsprechende Ebene (10) zugeführt oder von der entsprechenden Ebene (10) abgeführt wird.

7. Verfahren nach einem der vorhergehenden Ansprüche, **dadurch gekennzeichnet, dass** in Schritt c) das Weiterfördern mittels eines Teleskopförderers (3) erfolgt, dessen Länge der Förderstrecke an die Position des Roboters (5) in Schritt d) angepasst ist.

8. Verfahren nach einem der vorhergehenden Ansprüche, **dadurch gekennzeichnet, dass** das Ladevolumen (6) nach dem es beladen wurde, an einen Zielort transportiert wird und dort vollständig entladen wird.

9. Beladesystem (1) mit
- einer ersten Förderstrecke, die dazu ausgebildet ist, aus einem Lagerhaus ausgelagerte Einzelpackstücke (7) zu fördern,
- einem Zwischenspeicher (2), der die mittels der ersten Förderstrecke geförderten Einzelpackstücke (7) aufnimmt und einzelnen Speicherplätzen (11,12) zuordnet,
- einem Teleskopförderer (3), der sich an den Zwischenspeicher (2) anschließt und von dem Zwischenspeicher (2) abgeführte Einzelpackstücke (7) aufnimmt, und mit
- einem Beladeroboter (5), der an einem Ende der Förderstrecke des Teleskopförderers (3) angeordnet ist und dazu ausgebildet ist, einen Laderaum (6) vollautomatisiert unter Optimierung des Füllgrades des Laderaums (6) mit den Einzelpackstücken (7) zu beladen.

10. Beladesystem nach Anspruch 9, **dadurch gekennzeichnet, dass** der Zwischenspeicher (2) in einem Verladebereich eines Logistikzentrums oder angrenzend an einen Verladebereich eines Logistikzentrums angeordnet ist.

11. Verwendung eines Beladesystems (1) nach Anspruch 9 oder 10 zur füllgradoptimierten Beladung eines Ladevolumens (6) eines an einer Laderampe (8) oder Ladebrücke eines Logistikzentrums stehenden Lkws.

12. Computerprogrammprodukt mit Anweisungen, die das Beladesystem (1) nach Anspruch 9 oder 10 veranlassen, die Schritte des Verfahrens nach einem der Ansprüche 1 bis 8 auszuführen.
